# DEMANDE DE BREVET EUROPEEN

(11) **EP 4 778 695 A1**
(43) Date de publication de la demande: **22.07.2026**
(21) Numéro de dépôt: 25152651.3
(22) Date de dépôt: 17.01.2025
(51) Int. Cl.: B29C 33/38, G04B 19/12, G04D 3/00

(54) **PROCÉDÉS DE FABRICATION D'UN MOULE HORLOGER DE RÉPLICATION ET D'UN COMPOSANT HORLOGER**

(71) Demandeur: Richemont International S.A., 1752 Villars-sur-Glâne (CH)
(72) Inventeur: GAUTIER, Cyrille, 2300 La Chaux-de-Fonds (CH); LAVAL-GILLY, Sébastien, 2000 Neuchâtel (CH)
(74) Mandataire: LLR

(57) **Abrégé**

L'invention se rapporte à un procédé de fabrication d'au moins un composant (1) horloger métallique comportant les étapes e destinée à fabriquer un moule (9) horloger de réplication comportant une phase de fabrication additive d'une ébauche à base de matériau polymère, et g destinée à électroformer un matériau métallique (13) dans le moule (9) horloger de réplication pour former ledit au moins un composant (1) horloger.

## Description

### DOMAINE TECHNIQUE DE L'INVENTION

La présente invention se rapporte à la fabrication d'au moins un composant horloger à l'aide d'un procédé de réplication, c'est-à-dire notamment un (ou plusieurs) composant(s) horloger(s) peu(ven)t être fabriqué(s en même temps) avec un même moule de réplication et ce dernier peut être réutilisé plusieurs fois pour obtenir un nombre conséquent de composants horlogers identiques.

### ARRIÈRE-PLAN TECHNIQUE DE L'INVENTION

Il est déjà connu d'utiliser des procédés de réplication afin de créer des petites pièces à faible volume. Un composant horloger à fabriquer est réalisé pour fabriquer un moule de réplication en polymère. Ce moule de réplication est ensuite rempli par galvanoplastie pour former un clone du composant horloger.

Cette technique de réplication est très utile pour reproduire des formes de composants horlogers, toutefois, elle souffre de plusieurs inconvénients. Ainsi, les formes réplicables sont limitées, longues à réaliser, ne sont pas toujours parfaitement fidèles et les moules de réplication ne sont pas ou peu réutilisables.

### RÉSUMÉ DE L'INVENTION

L'invention a pour but de proposer des nouveaux procédés de fabrication d'un moule horloger de réplication et de fabrication d'un composant horloger qui sont davantage versatiles, c'est-à-dire permettent notamment de répliquer des formes même très complexes, de manière plus fidèle et plus rapide, voire permettent de réutiliser plusieurs fois un même moule de réplication pour diminuer encore davantage les coûts de production d'un (ou plusieurs) composant(s) horloger(s) et réduire les déchets utilisés.

À cet effet, l'invention a pour objet un procédé de fabrication d'un moule horloger de réplication comportant les étapes suivantes :
a - fabriquer une ébauche comportant un relief en négatif du moule horloger de réplication ;
b - placer l'ébauche dans un moule de forme ;
c - remplir de polymère le moule de forme pour former le moule horloger de réplication ;
d - libérer le moule horloger de réplication,
caractérisé en ce que l'étape a comporte une phase de fabrication additive à base de matériau polymère.

Avantageusement selon l'invention, l'étape a à base d'au moins une phase de fabrication additive permet au procédé d'être beaucoup plus précis et plus rapide par rapport à une pièce décolletée, usinée et / ou gravée en métal habituellement utilisée. Ainsi, des ébauches peuvent être très complexes avec des détails très fins obtenues en peu de temps (temps de mise sur le marché réduit) sans augmentation de la difficulté à réaliser l'étape a. Une plus grande variété de formes du moule horloger de réplication est donc obtenue.

Le relief en négatif de l'ébauche forme avantageusement selon l'invention au moins le relief du composant horloger à répliquer. L'étape a peut donc comporter une phase de numérisation du composant horloger à fabriquer destinée à précisément dimensionner l'ébauche. Une telle phase de numérisation peut être une conception virtuelle complète par un développeur, la numérisation en trois dimensions d'un composant horloger existant ou les deux (numérisation d'un composant horloger existant modifiée par un développeur pour affiner au moins un détail et / ou modifier au moins une partie). Le relief en négatif peut ainsi, avantageusement selon l'invention, être de très faible épaisseur par endroit pour notamment former par exemple un décor soleillé, sablé ou satiné sur le futur composant horloger sans que l'étape a soit plus difficile à être mise en oeuvre.

L'étape a peut par exemple comporter au moins une phase de micro-stéréolithographie par projection (PµSL) ou une phase de polymérisation à deux photons (TPP) pour former tout ou partie de l'ébauche, c'est-à-dire par exemple seulement tout ou partie de motifs en saillie d'un substrat ou aussi bien le substrat que lesdits motifs.

En outre, l'étape c permet de reproduire fidèlement les formes éventuellement très complexes avec des détails très fins de chaque ébauche sans augmentation de la difficulté à réaliser l'étape c. En outre, la même ébauche et le même moule de forme peuvent être utilisés plusieurs fois pour former plusieurs moules de réplication ce qui permet de réduire les coûts de production et les déchets. Enfin on comprend que l'ébauche peut comporter plusieurs formes (identiques ou non), c'est-à-dire correspondant à un (ou plusieurs) composant(s) horloger(s) (identiques ou non), pour une production de masse dont les coûts de production sont très réduits.

Selon un premier mode de réalisation, l'invention a également pour objet un procédé de fabrication d'au moins un composant horloger métallique comportant les étapes suivantes :
e - mettre en oeuvre le procédé de fabrication d'un moule horloger de réplication en polymère tel que présenté plus haut ;
f - déposer une couche électriquement conductrice contre le moule horloger de réplication ;
g - électroformer un matériau métallique dans le moule horloger de réplication pour former ledit au moins un composant horloger ;
h - libérer chaque composant horloger.

L'étape g permet de très simplement remplir le moule pour obtenir en même temps un (ou plusieurs) composant(s) horloger(s) métallique(s) très fidèle(s) à l'ébauche utilisée dans le procédé de fabrication du moule horloger de réplication tel que présenté plus haut. Le coût de production et les déchets de chaque composant horloger sont très abaissés par rapport à une production à base de décolletage, usinage et / ou gravage. En outre, la précision, le temps de fabrication et la finition de chaque composant horloger obtenu sont bien améliorés par rapport à ceux possibles par décolletage, usinage et / ou gravage.

L'invention peut également comporter l'une ou plusieurs des caractéristiques optionnelles suivantes, prises seules ou en combinaison.

L'étape g peut comporter une phase préalable destinée à réaliser une lithographie (telle qu'une photolithographie) sur le moule horloger de réplication afin de compléter la forme de ce dernier par ajout et / ou enlèvement de matière. Ainsi, par exemple dans le cas où plusieurs composants horlogers sont formés en même temps sur le même moule horloger de réplication, des parois périphériques pour chaque futur composant horloger et / ou une paroi périphérique unique du moule peuvent être prévues pour faciliter l'étape h de libération. Selon un autre exemple, la phase préalable peut également prévoir un gravage chimique (enlèvement de matière) en forme de décor (logo, décoration, etc.) ou de caractère (marque, numéro de série, etc.) pour être répliqué en saillie sur ledit au moins un composant horloger.

Après l'étape g ou l'étape h, le procédé peut comporter une étape i destinée à usiner le composant horloger afin de modifier sa forme par enlèvement de matière. Ainsi, entre les étapes g et h, l'ensemble électroformé peut être directement usiné pour façonner la face arrière de chaque composant horloger en utilisant le moule horloger de réplication comme support. Alternativement, après l'étape h, l'ensemble électroformé peut être usiné pour façonner la face arrière de chaque composant horloger. À titre d'exemple nullement limitatif, l'étape i peut par exemple permettre de former au moins un élément de fixation du composant horloger tel que des pieds de fixation et / ou corriger l'état de surface du composant horloger (par exemple usinage et / ou polissage).

Le procédé peut comporter une étape finale destinée à former au moins une couche de décoration sur au moins une partie du composant horloger afin de modifier l'aspect esthétique du composant horloger. Ladite au moins une couche de décoration peut être à base d'un métal précieux tel qu'à base d'or ou d'argent afin de donner un aspect haut de gamme au composant horloger.

Selon un deuxième mode de réalisation, l'invention a également pour objet un procédé de fabrication d'au moins un composant horloger métallique comportant les étapes suivantes :
e - mettre en oeuvre le procédé de fabrication d'un premier moule horloger de réplication en polymère selon l'une quelconque des revendications précédentes ;
f - déposer une couche électriquement conductrice contre le premier moule horloger de réplication ;
g - électroformer un matériau métallique dans le premier moule horloger de réplication pour former une ébauche métallique dudit au moins un composant horloger ;
h - libérer l'ébauche dudit au moins un composant horloger du premier moule de réplication ;
i - passiver la surface extérieure de l'ébauche dudit au moins un composant horloger ;
j - électroformer un matériau métallique contre l'ébauche dudit au moins un composant horloger pour former un deuxième moule de réplication métallique ;
k - libérer le deuxième moule de réplication de l'ébauche dudit au moins un composant horloger ;
l - passiver la surface extérieure du deuxième moule de réplication ;
m - électroformer un matériau métallique dans le deuxième moule horloger de réplication pour former ledit au moins un composant horloger ;
n - libérer chaque composant horloger.

Le deuxième mode de réalisation est préféré, car notamment il permet la réutilisation du deuxième moule de réplication métallique pour plusieurs nouvelles étapes m et n. Les étapes g et m permettent de très simplement remplir chaque moule de réplication pour obtenir en même temps successivement un deuxième moule métallique de réplication et un (ou plusieurs) composant(s) horloger(s) métallique(s) très fidèle(s) à l'ébauche utilisée dans le procédé de fabrication du moule horloger de réplication tel que présenté plus haut. Le coût de production et les déchets de chaque composant horloger sont encore davantage abaissés par rapport à une production à base de décolletage, usinage et / ou gravage du fait de l'utilisation possible à plusieurs reprises du deuxième moule de réplication métallique. En outre, la précision, le temps de fabrication et la finition de chaque composant horloger obtenu sont bien améliorés par rapport à ceux possibles par décolletage, usinage et / ou gravage.

L'invention peut également comporter l'une ou plusieurs des caractéristiques optionnelles suivantes, prises seules ou en combinaison.

L'étape m peut comporter une phase préalable destinée à réaliser une lithographie (telle qu'une photolithographie) sur le deuxième moule horloger de réplication afin de compléter la forme de ce dernier par ajout et/ou enlèvement de matière. Ainsi, par exemple dans le cas où plusieurs composants horlogers sont formés en même temps sur le même deuxième moule horloger de réplication, des parois périphériques pour chaque futur composant horloger et / ou une paroi périphérique unique du deuxième moule peuvent être prévues pour faciliter l'étape n de libération. Selon un autre exemple, la phase préalable peut également prévoir un gravage chimique (enlèvement de matière) en forme de décor (logo, décoration, etc.) ou de caractère (marque, numéro de série, etc.) pour être répliqué en saillie sur ledit au moins un composant horloger.

Après l'étape m ou l'étape n, le procédé peut comporter une étape o destinée à usiner le composant horloger afin de modifier sa forme par enlèvement de matière. Ainsi, entre les étapes m et n, l'ensemble électroformé peut être directement usiné pour façonner la face arrière de chaque composant horloger en utilisant le deuxième moule horloger de réplication comme support. Alternativement, après l'étape n, l'ensemble électroformé peut être usiné pour façonner la face arrière de chaque composant horloger. À titre d'exemple nullement limitatif, l'étape o peut par exemple permettre de former au moins un élément de fixation du composant horloger tel que des pieds de fixation et / ou corriger l'état de surface du composant 1 horloger (par exemple usinage et / ou polissage).

Le procédé peut comporter une étape finale destinée à former au moins une couche de décoration sur au moins une partie dudit au moins un composant horloger afin de modifier l'aspect esthétique dudit au moins un composant horloger. Ladite au moins une couche de décoration peut être à base d'un métal précieux tel qu'à base d'or ou d'argent afin de donner un aspect haut de gamme audit au moins un composant horloger.

### BRÈVE DESCRIPTION DES DESSINS

D'autres particularités et avantages de l'invention ressortiront clairement de la description qui en est faite ci-après, à titre indicatif et nullement limitatif, en référence aux dessins annexés, dans lesquels :
- la figure 1 est une vue schématique d'un exemple de pièce d'horlogerie comportant au moins un composant horloger selon l'invention ;
- les figures 2 à 7 sont des vues schématiques en coupe d'un exemple de procédés de fabrication selon un premier mode de réalisation de l'invention ;
- les figures 8 et 9 sont des vues schématiques en coupe d'une variante de l'exemple des figures 6 et 7 ;
- la figure 10 est une vue schématique en coupe d'une variante de l'exemple de la figure 2 ;
- la figure 11 est une vue schématique en coupe d'une variante de l'exemple de la figure 7 ;
- les figures 12 à 15 sont des vues schématiques en coupe d'un exemple de procédé de fabrication selon un deuxième mode de réalisation de l'invention ;
- les figures 16 et 17 sont des vues schématiques en coupe d'une variante de l'exemple des figures 14 et 15 ;
- la figure 18 est une vue schématique en coupe d'une variante de l'exemple de la figure 2.

### DESCRIPTION DÉTAILLÉE D'AU MOINS UN MODE DE RÉALISATION DE L'INVENTION

Sur les différentes figures, les éléments identiques ou similaires portent les mêmes références, éventuellement additionnés d'un indice. La description de leur structure et de leur fonction n'est donc pas systématiquement reprise.

Dans tout ce qui suit, les orientations sont les orientations des figures. En particulier, les termes « supérieur », « inférieur », « gauche », « droit », « au-dessus », « en-dessous », « vers l'avant » et « vers l'arrière » s'entendent généralement par rapport au sens de représentation des figures.

Par « à base de », on entend un matériau ou alliage constitué d'au moins 50 % en masse totale ou poids d'un élément donné tel que notamment 51 %, 55 %, 60 %, 65 %, 70 %, 75 %, 80 %, 85 %, 90 %, 95 % ou 100 % en masse totale. Bien entendu, dans le cas d'un matériau ou alliage comportant au moins trois éléments, l'expression « à base d'un premier élément » signifie un matériau ou alliage constitué majoritairement en masse totale ou poids dudit premier élément qui peut être dans ce cas inférieur à 50 % de la masse totale. Dans ce qui suit, sauf indication contraire, tous les pourcentages (%) indiqués sont des pourcentages en masse totale ou poids (en anglais « weight »).

Par « dépôt de faible épaisseur », on entend une couche mince de matériau déposée dont l'épaisseur est comprise sensiblement entre 1 nm et 1000 nm telle qu'une couche 11 électriquement conductrice par exemple mise en oeuvre par l'étape f du procédé selon l'invention. Le dépôt de faible épaisseur peut ainsi comprendre une épaisseur de matériau déposée égale à 1 nm, 5 nm, 10 nm, 20 nm, 30 nm, 40 nm, 50 nm, 60 nm, 70 nm, 80 nm, 90 nm, 100 nm, 150 nm, 200 nm, 250 nm, 300 nm, 350 nm, 400 nm, 450 nm, 500 nm, 550 nm, 600 nm, 650 nm, 700 nm, 750 nm, 800 nm, 850 nm, 900 nm ou 1000 nm. Le but de ce dépôt de faible épaisseur est d'offrir une couche compatible pour servir de siège à la future galvanoplastie (étape g) car le moule 10 de réplication en matériau polymère ne le permet pas.

Par « polymère », on entend tous les matériaux formés à base d'au moins une chaîne polymère, parfois appelée fibre, plus ou moins longue qui peuvent être aussi bien d'origine naturelle que synthétique.

Dans le cadre de l'invention, le terme polymère peut donc se rapporter à des matériaux à base d'époxy, d'acrylate ou de méthacrylate. L'époxy est préférentiellement utilisée car elle présente un retrait moins important. Les polymères pour une fabrication additive peuvent être thermodurcissables ou thermoplastiques selon les applications ciblées. Il existe également des résines biocompatibles ou biosourcées. Par exemple, le diacrylate de polyéthylène glycol (PEGDA) est un matériau possible.

Ainsi, pour une résine liquide photosensible, la composition peut comporter un mélange de photo-initiateurs couplé avec des monomères et oligomères. La polymérisation est de type radicalaire ou cationique (en chaîne), induite par une réaction photochimique du photoinitiateur lors de l'exposition de la résine liquide photosensible au rayonnement. Des résines liquides photosensibles à base de cinnamate de polyvinyle, de polyamide (PA), de polyisoprène ou de polyimide (PI) peuvent être envisagées.

Par « pièce d'horlogerie 2 », on entend tous les types d'instruments de mesure ou de comptage du temps tels que les pendules, les pendulettes, les montres, etc...

Par « mouvement horloger 3 », on entend tous les types de mécanisme capables de compter le temps qu'ils soient alimentés à base d'énergie mécanique (par exemple un barillet) ou électrique (par exemple une batterie).

Par « habillage 4 », on entend tous les types de dispositifs capables de contenir, afficher, décorer et/ou commander un mouvement horloger comme, par exemple, tout ou partie d'une boîte, d'un bracelet ou d'un affichage.

Par « pièce de micromécanique », on entend tous les types de pièces utilisables dans une pièce d'horlogerie 2 notamment pour former son mouvement horloger 3.

Le composant 1 a été développé pour s'appliquer au domaine horloger. Ainsi, le composant 1 horloger peut former tout ou partie d'un habillage 4 horloger comme tout ou partie d'un cadran tel qu'une applique 4A, d'un réhaut, d'un affichage tel qu'une aiguille 4B ou un disque (phase de lune 4C, quantième 4D), d'une boîte, d'un bracelet, d'une glace ou d'un organe de commande tel qu'une couronne ou un bouton-poussoir. Le composant 1 horloger peut également former tout ou partie du mouvement horloger 3 comme tout ou partie d'un dispositif d'échappement tel qu'un mécanisme à ancre suisse, d'un résonateur tel qu'un mécanisme balancier - spiral, d'une source d'énergie tel qu'un barillet, d'un système de remontage automatique tel qu'une masse oscillante, d'un rouage tel qu'un mobile ou une roue dentée, d'un ressort, d'une vis, d'un pont ou d'une platine.

L'invention a pour but de proposer des nouveaux procédés de fabrication permettant d'obtenir au moins un composant 1 horloger même de formes très complexes, de manière plus fidèle et plus rapide, à faible coût de production et faibles déchets.

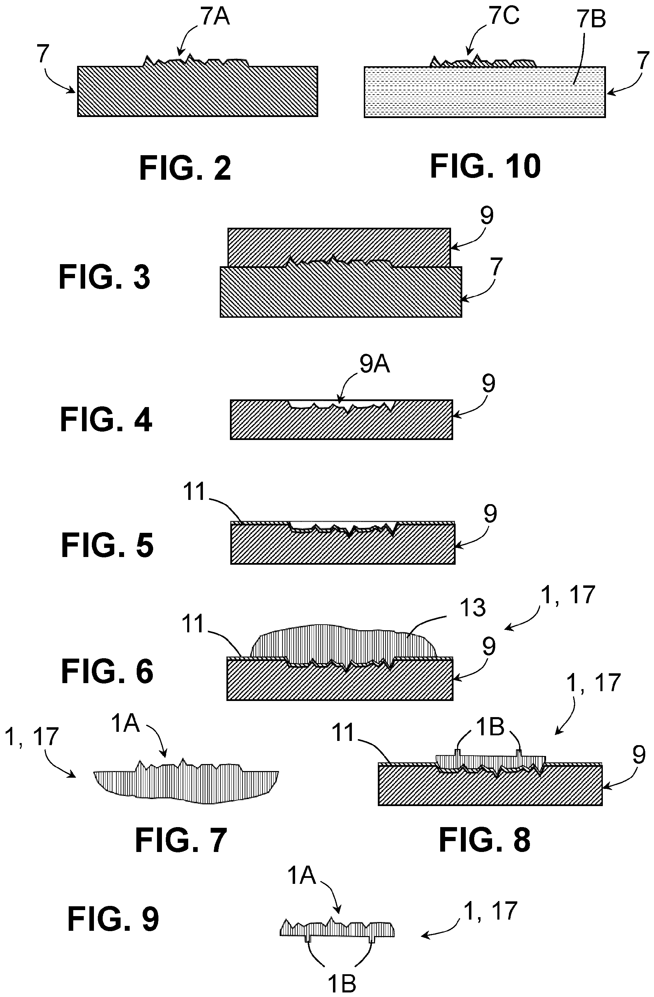

Dans l'exemple illustré aux figures 2 à 4, un procédé de fabrication d'un moule 9 horloger de réplication est présenté. Le procédé comporte une première étape a destinée à fabriquer une ébauche 7 (parfois appelé master) comportant un relief 7A en négatif du moule 9 horloger de réplication. Comme visible aux figures 2 et 10, l'ébauche 7 peut être monobloc, c'est-à-dire d'un seul tenant, ou être formée d'un substrat 7B et d'un dépôt 7C en relief.

Le relief 7A en négatif de l'ébauche 7 forme avantageusement selon l'invention le relief du composant 1 horloger à répliquer. L'étape a peut donc comporter une phase de numérisation du composant 1 horloger à fabriquer destinée à précisément dimensionner l'ébauche 7. Une telle phase de numérisation peut être une conception virtuelle complète par un développeur, la numérisation en trois dimensions d'un composant 1 horloger existant ou les deux (numérisation d'un composant 1 horloger existant modifiée par un développeur pour affiner au moins un détail et / ou modifier au moins une partie). Le relief 7A en négatif peut ainsi, avantageusement selon l'invention, être de très faible épaisseur par endroit pour notamment former par exemple un décor soleillé, sablé ou satiné sur le futur composant horloger sans que l'étape a soit plus difficile à être mise en oeuvre.

Avantageusement selon l'invention, l'étape a comporte au moins une phase de fabrication additive à base de matériau polymère, par exemple pour former l'ébauche 7 monobloc ou pour former uniquement dépôt 7C en relief en peu de temps. Ainsi, l'étape a permet au procédé d'être rapide et beaucoup plus précis par rapport à une pièce décolletée, usinée et / ou gravée en métal habituellement utilisée. Avantageusement, des ébauches 7 peuvent être très complexes avec des détails très fins sans augmentation de la difficulté à réaliser l'étape a. Une plus grande variété de formes du moule 9 horloger de réplication est donc obtenue.

Bien entendu, le volume de l'ébauche 7 est dimensionné en prenant en compte le pourcentage de l'éventuel retrait du matériau utilisé pour l'étape a. En effet, un matériau polymère, par exemple, utilisé pour la fabrication additive peut perdre en volume une fois que le degré de polymérisation a atteint son maximum comme, par exemple, au moment de l'étape c. Ainsi, entre la première réticulation de l'étape a et la pièce « finale » de l'étape c, une modification de volume homogène compris entre 0 (perte négligeable) et - 0,7 % (contraction du volume) peut intervenir.

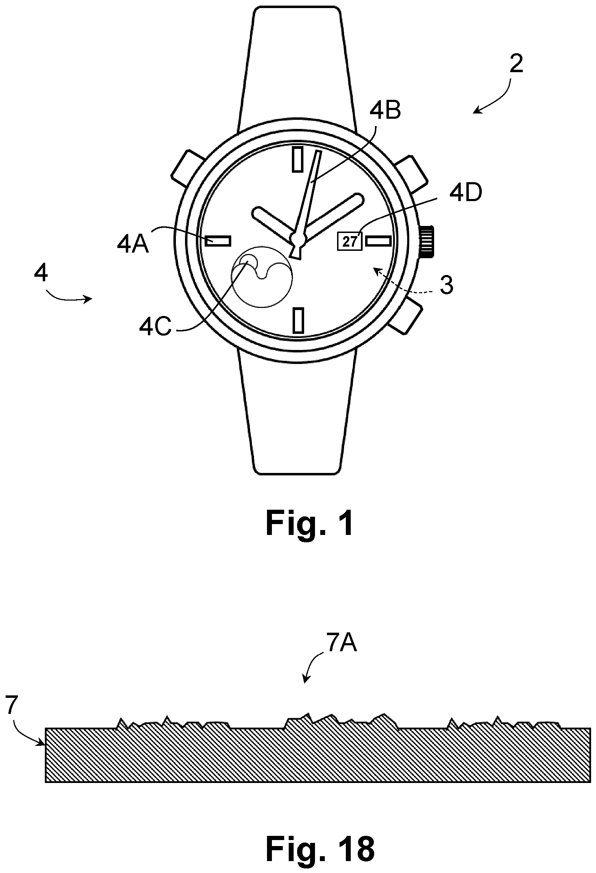

L'étape a peut par exemple comporter au moins une phase de micro-stéréolithographie par projection (PµSL) et / ou une phase de polymérisation à deux photons (TPP) pour former tout ou partie de l'ébauche 7, c'est-à-dire par exemple seulement tout ou partie de motifs 7A en saillie d'un substrat 7B ou aussi bien le substrat 7B que lesdits motifs 7A. Bien entendu, le but étant de répliquer l'ébauche 7, cette dernière peut comporter peut comporter plusieurs formes identiques (une forme dans l'exemple des figures 2 et 10) ou non (deux formes différentes dans l'exemple de la figure 18), c'est-à-dire correspondant à un (ou plusieurs) composant(s) 1 horloger(s) identique(s) ou non), pour une production de masse dont les coûts de production sont très réduits.

Une micro-stéréolithographie par projection (parfois abrégée « PµSL » venant des termes anglais « projection micro-stereolithography ») de manière connue utilise généralement des masques de stéréolithographie dynamiques qui fonctionnent comme des masques photographiques virtuels et un faisceau laser qui balaie point par point la surface supérieure d'une résine liquide formée d'un mélange de monomères et d'un photoinitiateur. Le rayonnement laser focalisé précisément aux différents points permet d'activer le photoinitiateur pour initier la polymérisation localisée de la résine. Une plate-forme mobile est immergée dans une cuve contenant la résine liquide pour supporter chaque couche qui est polymérisée, c'est-à-dire quand chaque épaisseur de couche est polymérisée, la plate-forme est déplacée pour laisser une nouvelle surface supérieure de résine liquide dépourvue de matériau polymérisé pour former une nouvelle couche. Couche par couche, l'ébauche 7 est ainsi fabriquée en trois dimensions selon des dimensions précises (de l'ordre du micromètre) préalablement prévues. L'ébauche 7 est ensuite sortie de l'appareil et éventuellement nettoyée. Selon le besoin en termes de finition, il est également possible de réaliser un polissage solvent en phase vapeur afin d'éliminer les stries d'impression. Enfin, un traitement thermique peut être réalisé afin d'augmenter le taux de conversion des monomères et / ou durcir le matériau de l'ébauche 7.

Une polymérisation à deux photons (parfois abrégée « TPP » ou « 2PP ») de manière connue est plus précise (de l'ordre du centième de micromètre) que la photolithographie (SLA) mais est plus lente à mettre en oeuvre. Par conséquent, lorsque la polymérisation à deux photons (TPP) est utilisée, elle est préférentiellement utilisée pour former uniquement dépôt 7C en relief. La polymérisation à deux photons (TPP) utilise l'effet physique de base de l'absorption à deux photons qui se produit lorsqu'un atome ou une molécule absorbe deux photons simultanément, ce qui lui permet d'être excité à un état d'énergie plus élevé. La polymérisation à deux photons (TPP) utilise une lumière dans le proche infra-rouge (NIR) pour provoquer la solidification d'une résine liquide photosensible uniquement si les molécules de résine liquide photosensible absorbent simultanément l'énergie de deux photons. Ce mécanisme n'est probable que dans le volume focal de la lumière pulsée très petit (ce rend la méthode très précise et sélective), car il nécessite une intensité lumineuse suffisamment élevée à l'intérieur dudit volume de résine liquide photosensible. L'appareillage peut ainsi utiliser un femtolaser (émettant des impulsions de lumière ultra-courtes qui contiennent une densité photonique élevée) et peut déplacer de manière précise (positionnement de l'ordre du nanomètre) le point focal à des vitesses de centaines de millimètres par seconde pour construire des microstructures tel que le dépôt 7C en relief en trois dimensions très complexes. L'ébauche 7 est ensuite sortie de l'appareil et éventuellement nettoyée. Enfin, un traitement thermique peut être réalisé afin d'augmenter le taux de conversion des monomères et / ou durcir le matériau de l'ébauche 7.

Bien entendu, le substrat 7B peut également être obtenu par une simple injection ou coulage d'au moins un matériau polymère ou être formé par une plaquette par exemple à base de silicium (appréciée pour sa planéité), d'acier inoxydable ou de céramique (oxyde, nitrure, carbure, sulfure) telle que du quartz sans sortir du cadre de l'invention. En outre, l'adhérence entre le substrat 7B et le dépôt 7C en relief peut être améliorée en augmentant la surface de contact à l'interface (rugosité augmentée du substrat 7B par exemple par sablage ou attaque chimique) ou en imprimant le dépôt 7C en relief contre au moins une forme formant crochet en saillie du substrat 7B (pièce en forme de Γ (gamma) ou T (tau) à la surface du substrat 7B).

En outre, entre l'étape a et l'étape b, une étape de tribofinition, de polissage et / ou décoration (revêtement au moins partiel) peut être réalisée pour obtenir des effets localisés sur le futur moule 9 de réplication plus difficile à obtenir qu'après l'étape c. On peut ainsi former des décors en négatif sur l'ébauche 7 sur des reliefs en saillie qui seraient plus difficiles d'obtenir dans des reliefs qui seront en creux dans le moule 9 de réplication obtenu.

Le procédé comporte ensuite une deuxième étape b destinée à placer l'ébauche 7 dans un moule de forme (non représenté) puis une troisième étape c destinée à remplir un polymère dans le moule de forme pour former le moule 9 horloger de réplication comme visible dans l'exemple de la figure 3. Le remplissage du moule peut être obtenu par injection, par injection compression, par gaufrage thermique ou par coulage du polymère. Enfin, le procédé comporte une quatrième et dernière étape d destinée à libérer le moule 9 horloger de réplication de l'ébauche 7 comme visible dans l'exemple de la figure 4. On obtient ainsi un moule 9 en polymère de réplication avec une empreinte 9A très fidèle en négatif de l'ébauche 7 en peu de temps. En outre, la même ébauche 7 et le même moule de forme peuvent être utilisés plusieurs fois pour former plusieurs moules 9 de réplication ce qui permet de réduire les coûts de production et les déchets. Par conséquent, l'étape c permet de reproduire fidèlement les formes éventuellement très complexes avec des détails très fins de chaque ébauche 7 sans augmentation de la difficulté à réaliser l'étape c.

Comme visible dans l'exemple des figures 2 à 7, le procédé de fabrication d'au moins un composant 1 horloger métallique selon un premier mode de réalisation de l'invention est présenté. Ainsi, outre les étapes a - d (grande étape nommée e) du procédé de fabrication du moule 9 horloger de réplication en polymère, le procédé comporte ensuite une étape f destinée à déposer une couche 11 électriquement conductrice, préférentiellement de faible épaisseur, contre le moule 9 horloger de réplication comme visible dans l'exemple de la figure 5.

Le procédé selon le premier mode de réalisation de l'invention se poursuit avec l'étape g destinée à électroformer un matériau 13 métallique dans le moule 9 horloger de réplication pour former ledit au moins un composant 1 horloger comme visible dans l'exemple de la figure 6, puis une étape h destinée à libérer chaque composant 1 horloger comme visible dans l'exemple de la figure 7. Le composant 1 horloger peut être à base de tout matériau électriquement conducteur tel que par exemple être à base de nickel, de cuivre, d'argent ou d'or.

On comprend que l'étape g permet de très simplement remplir le moule 9 pour obtenir en même temps un (ou plusieurs) composant(s) 1 horloger(s) métallique(s) très fidèle(s) à l'ébauche 7 utilisée dans le procédé de fabrication du moule 9 horloger de réplication tel que présenté plus haut. Le coût de production et les déchets de chaque composant 1 horloger sont très abaissés par rapport à une production à base de décolletage, usinage et / ou gravage. En outre, la précision, le temps de fabrication et la finition de chaque composant 1 horloger obtenu sont bien améliorés par rapport à ceux possibles par décolletage, usinage et / ou gravage.

L'étape g peut comporter une phase préalable destinée à réaliser une lithographie (telle qu'une photolithographie) sur le moule 9 horloger de réplication afin de compléter la forme de ce dernier par ajout et / ou enlèvement de matière. Ainsi, par exemple dans le cas où plusieurs composants 1 horlogers sont formés en même temps sur le même moule 9 horloger de réplication, des parois périphériques pour chaque futur composant 1 horloger et / ou une paroi périphérique unique du moule 9 peuvent être prévues pour faciliter l'étape h de libération. Selon un autre exemple, la phase préalable peut également prévoir un gravage chimique (enlèvement de matière) en forme de décor (logo, décoration, etc.) ou de caractère (marque, numéro de série, etc.) pour être répliqué en saillie sur ledit au moins un composant 1 horloger.

Après l'étape g ou l'étape h, le procédé peut comporter une étape i destinée à usiner le composant 1 horloger afin de modifier sa forme par enlèvement de matière. Ainsi, comme visible dans l'exemple de la figure 8, entre les étapes g et h, l'ensemble électroformé peut être directement usiné pour façonner la face arrière de chaque composant 1 horloger et / ou séparer chaque composant 1 horloger les uns des autres en utilisant le moule 9 horloger de réplication comme support. Alternativement, après l'étape h, l'ensemble électroformé peut être usiné pour façonner la face arrière de chaque composant 1 horloger et / ou séparer chaque composant 1 horloger les uns des autres. À titre d'exemple nullement limitatif, l'étape i peut par exemple permettre de former au moins un élément 1B de fixation du composant 1 horloger tel que des pieds de fixation comme visible dans l'exemple de la figure 9 et / ou corriger l'état de surface du composant 1 horloger (par exemple usinage et / ou polissage) pour y implanter, par exemple par soudage ou brasage, ledit au moins un élément 1B de fixation ou tout autre élément du composant 1 horloger.

Le procédé peut également comporter une étape finale destinée à former au moins une couche de décoration (non représentée) sur au moins une partie du composant 1 horloger afin de modifier l'aspect esthétique du composant 1 horloger. Ladite au moins une couche de décoration (non représentée) peut être par exemple à base d'un métal précieux tel qu'à base d'or ou d'argent afin de donner un aspect haut de gamme au composant 1 horloger. En complément ou en substitution, le composant 1 horloger peut être entièrement ou partiellement coloré via des laques ou un revêtement interférentiel et/ou être décoré entièrement ou partiellement par une technique de soleillage, giclage, texturation laser ou autre.

Comme visible dans l'exemple des figures 2 à 7 et 11 à 15, le procédé de fabrication d'au moins un composant 1 horloger métallique selon un deuxième mode de réalisation de l'invention est présenté. Ainsi, outre les étapes a - d (grande étape nommée e) du procédé de fabrication du moule 9 horloger de réplication en polymère, le procédé comporte ensuite une étape f destinée à déposer une couche 11 électriquement conductrice, préférentiellement de faible épaisseur, contre le premier moule 9 horloger de réplication comme visible dans l'exemple de la figure 5.

Le procédé selon le deuxième mode de réalisation de l'invention se poursuit avec l'étape g destinée à électroformer un matériau 13 métallique dans le premier moule 9 horloger de réplication pour former une ébauche 17 dudit au moins un composant 1 horloger comme visible dans l'exemple de la figure 6, puis une étape h destinée à libérer chaque ébauche 17 dudit au moins un composant 1 horloger comme visible dans l'exemple de la figure 7. L'ébauche 17 dudit composant 1 horloger peut par exemple être à base de nickel. Les mêmes effets techniques et avantages du premier mode de réalisation sont donc retrouvés. On comprend notamment que l'étape g permet de très simplement remplir le premier moule 9 pour obtenir en même temps un (ou plusieurs) ébauche(s) 17 métallique(s) dudit au moins un composant 1 horloger très fidèle(s) à l'ébauche 7 utilisée dans le procédé de fabrication du premier moule 9 horloger de réplication tel que présenté plus haut.

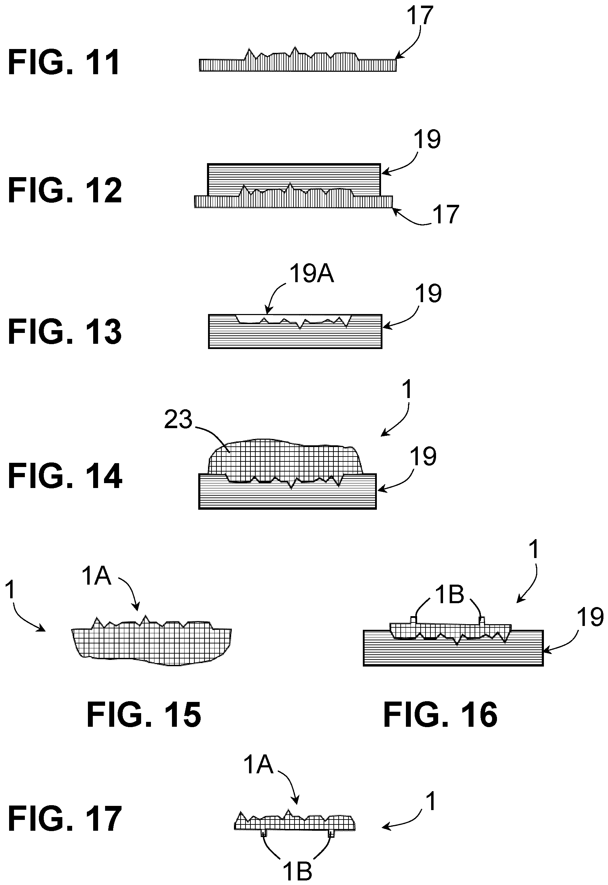

Dans le deuxième mode de réalisation, le procédé se poursuit avec l'étape i destinée à passiver la surface extérieure de l'ébauche 17 dudit au moins un composant 1 horloger comme visible dans l'exemple de la figure 11. Cette étape i a pour but de simplifier la délamination entre l'ébauche 17 et le deuxième moule 19 de réplication. Elle peut être obtenue par un traitement chimique ou un dépôt d'une couche de matière sacrificielle permettant l'électroformage de l'étape j.

Le procédé se poursuit avec l'étape j destinée à électroformer un matériau métallique contre l'ébauche 17 dudit au moins un composant 1 horloger pour former un deuxième moule 19 de réplication métallique comme visible dans l'exemple de la figure 12. Le deuxième moule 19 de réplication peut par exemple être à base de nickel et de cobalt ou être formé principalement, dans un premier électroformage, à base de cuivre puis recouvert superficiellement, dans un deuxième électroformage, à base de nickel. L'étape j permettent de très simplement surmouler l'ébauche 17 pour obtenir un deuxième moule 19 métallique de réplication à l'ébauche 7 utilisée dans le procédé de fabrication du moule 9 horloger de réplication tel que présenté plus haut. Ici encore, la précision, le temps de fabrication et la finition obtenu du deuxième moule 19 métallique de réplication sont bien améliorés par rapport à ceux possibles par décolletage, usinage et / ou gravage.

Comme visible dans l'exemple de la figure 13, le procédé comporte ensuite l'étape k destinée à libérer le deuxième moule 19 de réplication de l'ébauche 17 dudit au moins un composant 1 horloger. On obtient ainsi un deuxième moule 19 métallique de réplication avec une empreinte 19A très fidèle en négatif de l'ébauche 7 en peu de temps. Le deuxième mode de réalisation est préféré, car notamment il permet la réutilisation du même deuxième moule 19 de réplication métallique pour fabriquer plusieurs séries de composant 1 horloger (étapes m et n répétées avec le même moule 19). En outre, la même ébauche 17 peut être utilisée plusieurs fois pour former plusieurs deuxièmes moules 19 de réplication ce qui permet de réduire les coûts de production et les déchets.

Le procédé comprend après une étape I destinée à passiver la surface extérieure du deuxième moule 19 de réplication. Cette étape I a pour but de simplifier la délamination entre chaque composant 1 horloger et le deuxième moule 19 de réplication. Elle peut être obtenue par un traitement chimique ou un dépôt d'une couche de matière sacrificielle permettant l'électroformage de l'étape m.

Comme visible dans l'exemple de la figure 14, le procédé se poursuit avec l'étape m destinée à électroformer un matériau métallique 23 dans le deuxième moule 19 horloger de réplication pour former ledit au moins un composant 1 horloger. Le composant 1 horloger peut par exemple être à base de nickel. L'étape m permet de très simplement remplir le deuxième moule 19 de réplication pour obtenir en même temps successivement un (ou plusieurs) composant(s) 1 horloger(s) métallique(s) très fidèle(s) à l'ébauche 7 utilisée dans le procédé de fabrication du moule 9 horloger de réplication tel que présenté plus haut. Ici encore, la précision, le temps de fabrication et la finition obtenu de chaque composant 1 horloger sont bien améliorés par rapport à ceux possibles par décolletage, usinage et / ou gravage.

Comme visible dans l'exemple de la figure 15, le procédé comporte ensuite l'étape k destinée à chaque composant 1 horloger du deuxième moule 19 de réplication. On obtient ainsi au moins un chaque composant 1 horloger avec un relief 1A très fidèle à l'ébauche 7 en peu de temps. Le deuxième mode de réalisation est préféré, car notamment il permet la réutilisation du même deuxième moule 19 de réplication métallique pour fabriquer plusieurs séries de composant 1 horloger (étapes m et n répétées avec le même moule 19). Le coût de production et les déchets de chaque composant 1 horloger sont donc encore davantage avantageusement abaissés par rapport à une production à base de décolletage, usinage et / ou gravage. En outre, la précision, le temps de fabrication et la finition de chaque composant 1 horloger obtenu sont bien améliorés par rapport à ceux possibles par décolletage, usinage et / ou gravage.

L'étape m peut comporter une phase préalable destinée à réaliser une lithographie (telle qu'une photolithographie) sur le deuxième moule 19 horloger de réplication afin de compléter la forme de ce dernier par ajout et / ou enlèvement de matière. Ainsi, par exemple dans le cas où plusieurs composants 1 horlogers sont formés en même temps sur le même deuxième moule 19 horloger de réplication, des parois périphériques pour chaque futur composant 1 horloger et / ou une paroi périphérique unique du deuxième moule 19 peuvent être prévues pour faciliter l'étape n de libération. Selon un autre exemple, la phase préalable peut également prévoir un gravage chimique (enlèvement de matière) en forme de décor (logo, décoration, etc.) ou de caractère (marque, numéro de série, etc.) pour être répliqué en saillie sur ledit au moins un composant 1 horloger.

Après l'étape m ou l'étape n, le procédé selon le deuxième mode de réalisation de l'invention peut comporter une étape o destinée à usiner le composant 1 horloger afin de modifier sa forme par enlèvement de matière. Ainsi, comme visible dans l'exemple de la figure 16, entre les étapes m et n, l'ensemble électroformé peut être directement usiné pour façonner la face arrière de chaque composant 1 horloger et / ou séparer chaque composant 1 horloger les uns des autres en utilisant le deuxième moule 19 horloger de réplication comme support. Alternativement, comme visible dans l'exemple de la figure 17, après l'étape n, l'ensemble électroformé peut être usiné pour façonner la face arrière de chaque composant 1 horloger et / ou séparer chaque composant 1 horloger les uns des autres. À titre d'exemple nullement limitatif, l'étape o peut par exemple permettre de former au moins un élément 1B de fixation du composant horloger tel que des pieds de fixation comme visible dans l'exemple de la figure 17 et / ou corriger l'état de surface du composant 1 horloger (par exemple usinage et / ou polissage) pour y implanter, par exemple par soudage ou brasage, ledit au moins un élément 1B de fixation ou tout autre élément du composant 1 horloger.

Le procédé selon le deuxième mode de réalisation de l'invention peut comporter une étape finale destinée à former au moins une couche de décoration (non représentée) sur au moins une partie dudit au moins un composant 1 horloger afin de modifier l'aspect esthétique dudit au moins un composant 1 horloger. Ladite au moins une couche de décoration peut être à base d'un métal précieux tel qu'à base d'or ou d'argent afin de donner un aspect haut de gamme audit au moins un composant 1 horloger.

L'invention n'est pas limitée aux modes de réalisation et variantes présentés et d'autres modes de réalisation et variantes apparaîtront clairement à l'homme du métier. Ainsi, les réalisations ci-dessus sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

En outre, l'invention ne saurait se limiter à une pièce d'horlogerie. Ainsi, l'invention pourrait également être appliquée dans d'autres domaines tels que, par exemple, la bijouterie, la joaillerie, la maroquinerie, les arts de la table, les articles métalliques de vêtements, les instruments d'optique, les armes à feu ou les instruments d'écriture.

### LISTE DES RÉFÉRENCES

1 - composant horloger
1A -forme en relief
1B -élément de fixation
2 - pièce d'horlogerie
3 - mouvement horloger
4 - habillage
4A - applique
4B -aiguille
4C -disque de phase de lune
4D -disque de quantième
7 - ébauche
   7A - relief de l'ébauche
   7B -substrat
   7C -dépôt en relief
   9 - moule de réplication en polymère
   9A -empreinte du moule de réplication
11 - couche électriquement conductrice
13 - dépôt electroformé
13A - forme en relief
17 - ébauche
19 - moule de réplication en métal
19A - empreinte du moule de réplication
23 - dépôt electroformé
23A - forme en relief

## Revendications

1. Procédé de fabrication d'un moule (9) horloger de réplication en polymère comportant les étapes suivantes :
a - fabriquer une ébauche (7) comportant un relief en négatif du moule (9) horloger de réplication ;
b - placer l'ébauche (7) dans un moule de forme ;
c - remplir de polymère le moule de forme pour former le moule (9) horloger de réplication ;
d - libérer le moule (9) horloger de réplication,
**caractérisé en ce que** l'étape a comporte une phase de fabrication additive à base de matériau polymère.

2. Procédé de fabrication d'au moins un composant (1) horloger métallique comportant les étapes suivantes :
e - mettre en oeuvre le procédé de fabrication d'un moule (9) horloger de réplication en polymère selon la revendication précédente ;
f - déposer une couche (11) électriquement conductrice contre le moule (9) horloger de réplication ;
g - électroformer un matériau métallique (13) dans le moule (9) horloger de réplication pour former ledit au moins un composant (1) horloger ;
h - libérer chaque composant (1) horloger.

3. Procédé selon la revendication précédente, comportant, après l'étape g ou l'étape h, l'étape suivante :
i - usiner le composant (1) horloger afin de modifier sa forme par enlèvement de matière.

4. Procédé selon la revendication précédente, dans lequel l'étape i permet de former au moins un élément (1B) de fixation du composant (1) horloger.

5. Procédé de fabrication d'au moins un composant (1) horloger comportant les étapes suivantes :
e - mettre en oeuvre le procédé de fabrication d'un premier moule (9) horloger de réplication en polymère selon la revendication 1 ;
f - déposer une couche (11) électriquement conductrice contre le premier moule (9) horloger de réplication ;
g - électroformer un matériau métallique (13) dans le premier moule (9) horloger de réplication pour former une ébauche (17) métallique dudit au moins un composant (1) horloger ;
h - libérer l'ébauche (17) dudit au moins un composant (1) horloger du premier moule (9) de réplication ;
i - passiver la surface extérieure de l'ébauche (17) dudit au moins un composant (1) horloger ;
j - électroformer un matériau métallique contre l'ébauche (17) dudit au moins un composant (1) horloger pour former un deuxième moule (19) de réplication métallique ;
k - libérer le deuxième moule (19) de réplication de l'ébauche (17) dudit au moins un composant (1) horloger ;
l - passiver la surface extérieure du deuxième moule (19) de réplication ;
m - électroformer un matériau métallique (23) dans le deuxième moule (19) horloger de réplication pour former ledit au moins un composant (1) horloger ;
n - libérer chaque composant horloger.

6. Procédé selon la revendication précédente, comportant, après l'étape m ou l'étape n, l'étape suivante :
o - usiner le composant (1) horloger afin de modifier sa forme par enlèvement de matière.

7. Procédé selon la revendication précédente, dans lequel l'étape n permet de former au moins un élément (1B) de fixation du composant (1) horloger.

8. Procédé selon l'une quelconque des revendications 2 à 7, dans lequel le procédé comporte l'étape finale suivante :
former au moins une couche de décoration sur au moins une partie dudit au moins un composant (1) horloger afin de modifier l'aspect esthétique dudit au moins un composant horloger.

9. Procédé selon la revendication précédente, dans lequel ladite au moins une couche de décoration est à base d'un métal précieux.

10. Procédé selon l'une quelconque des revendications 2 à 9, dans lequel plusieurs composants (1) horlogers sont fabriqués en même temps.
